# EUROPEAN PATENT SPECIFICATION

(11) **EP 0 927 520 B1**
(45) Date of publication and mention of the grant of the patent: **20.04.2005**
(21) Application number: 97204120.6
(22) Date of filing: 29.12.1997
(51) Int. Cl.: A23L 1/16, A23L 1/162

(54) **Full-moisture noodle product**
Wasserhaltiges Nudelprodukt
Nouilles contenant de l'eau

(43) Date of publication of application: 07.07.1999
(73) Proprietor: SOCIETE DES PRODUITS NESTLE S.A., 1800 Vevey (CH)
(72) Inventor: Meyer, Philipp Paul, 8121 Benglen (CH); Scoville, Eugene, New Milford, CO 06776 (US); Jaelminger, Göran, 25661 Helsingborg (SE); Rudberg-Tamm, Marianne, 26263 Ängelholm (SE); Toh, Tian Seng, 640941 Singapore (SG)
(74) Representative: Thomas, Alain

(56) References cited:
- EP-A- 0 105 100
- EP-A- 0 415 787
- EP-A- 0 591 793

## Description

The present invention relates to a noodle product and to a process for manufacturing this product.

The present invention especially relates to a noodle product of the Koay Teow type. Chinese rice noodles known as Koay Teow traditionally have a ribbon shape and a smooth, tender and slight resilient texture. Koay Teow noodles are traditionally made by steaming a thin layer of rice slurry on a steaming conveyer belt, the cooked rice sheet being then oiled, folded and cut into strips.

EP591793 (SOCIETE DES PRODUITS NESTLE) discloses a method for producing a noodle product of the Koay Teow type in which a mixture is prepared having a rather high water content and comprising a flour or semolina of rice, an ionic gelling agent, an emulsifier and a raising agent, noodles are formed by cooking-extrusion of the mixture, the noodles are immediately brought into contact with water containing a cation which forms a gel with the ionic gelling agent, and they are dried.

A first object of the present invention is to provide a full moisture shelf stable noodle product of the Koay Teow type which is not intended to be actually cooked at the consumer's end but, on the contrary, is intended to be consumed after unpacking and simply heating up or very shortly cooking.

A second object of the present invention is to provide a process for manufacturing a full moisture shelf stable noodle product of the Koay Teow type which is intended to be consumed after unpacking and simply heating up or very shortly cooking.

The full moisture shelf stable noodle product according to the present invention has a dry matter content of from 30 to 45% by weight, has a pH of 3.7 to 4.5, preferably 3.8 to 4.3, and comprises a cooked flour or semolina of a starchy plant, softened water, a cooked starch, an ionic gelling agent, an emulsifier, a cation which has formed a gel with the ionic gelling agent, an acid and an oil.

The process for manufacturing a full moisture shelf stable noodle product according to the present invention consists of preparing a mixture having a dry matter content of from 30 to less than 45% by weight and comprising a flour or semolina of a starchy plant, softened water, a starch, an ionic gelling agent and an emulsifier, forming the noodle product by cooking-extrusion of the mixture, immediately bringing the noodle product into contact with water containing a cation which forms a gel with the ionic gelling agent, dewatering the noodle product, cutting and portioning it, water cooling it, dipping it into an acidified water, oiling it, packaging it and in pack pasteurising it.

In the present disclosure, the expression "noodle product of the Koay Teow type" means a noodle product which has the smooth, tender and slightly resilient texture of traditionally made Koay Teow noodles.

The noodle product according to the present invention preferably has a rectangular cross section. It may have a cross section about 8 to 14 mm in width and about 0.6 to 1.2 mm in height, for example.

The present noodle product preferably comprises, in parts by weight on dry matter, from 70 to 100 parts of cooked flour or semolina of a starchy plant, from 5 to 30 parts of cooked starch, from 0.2 to 1.5 parts of ionic gelling agent, from 0.5 to 5 parts of emulsifier and from 0.5 to 5 parts of oil.

In the present noodle product the starchy plant may be cereal grains such as rice or maize, legumes such as soya, or tubers rich in starch such as potato or yam, for example.

The starch preferably is maize starch, potato starch or tapioca starch.

The ionic gelling agent may be an acid polysaccharide, especially an alginate, the cation may be an alkaline earth metal ion, especially the divalent calcium ion, the emulsifier may be a monoglyceride or a mixture of monoglycerides, the acid may be any food grade acid, especially lactic acid or phosphoric acid, and the oil may be a vegetable oil, especially peanut oil, rapeseed oil, sunflower oil or palm olein, for example.

The present noodle product may further comprise from 0.2 to 2 parts of hydrocolloid such as guar gum, xanthan gum or carob bean flour, and from 0.5 to 5 parts of proteins such as wheat proteins, which may be very useful in improving the stability and/or the integrity of the noodle product, for example.

To implement the present process, soft water is used which preferably has a calcium ion concentration of less than about 4.10⁻⁴ moles/l and a temperature of from 10-90°C, especially a temperature of from 60 to 80°C.

A mixture is prepared which, beside soft water, preferably comprises, in parts by weight, from 70 to 100 parts of flour or semolina of a starchy plant, from 5 to 30 parts of starch, from 0.2 to 1.5 parts of ionic gelling agent, and from 0.5 to 5 parts of emulsifier.

Preferably, the flour or semolina of a starchy plant is a rice or maize flour or semolina, or a soya, potato or yam flour.

Cooking-extrusion of the mixture preferably is carried out under from 0.8 MPa to 6.9 MPa (from 8 to 69 bar), at from 60 to 105°C and for 20 to 120 s.

Extrusion may be carried out through a die with holes of rectangular cross section about 8 to 14 mm in width and about 0.6 to 1.2 mm in height, for example.

The temperature of the noodle product preferably is adjusted during cooking-extrusion so that it is from about 100 to 105°C on discharge from the die.

The extruded noodle product preferably is brought into contact for 2 to 30 s with a water containing the cation at a concentration of from 0.05 to 0.2 moles/l and having a temperature of from 60 to 70°C.

Dewatering may be carried out by blowing air on the noodle product in order to remove water containing the cation which remained on the surface of the noodle product.

The step of cutting and portioning may in fact be carried out at one stage freely choosen between the dewatering step and before the packaging step.

The dewatered and water cooled noodle product preferably is dipped into an acidified water containing from 0.5 to 1.5% acid, especially lactic and/or phosphoric acid, at ambient temperature, especially at from 18 to 35°C, and for from 60 to 150 s.

After this acidifying step excessive water is preferably drained off.

Then the oiling step is carried out so that the noodle product preferably is covered with from 0.5 to 5% oil with or without adequate emulsifier.

The oiled noodle product preferably is packed in a flexible pouch with a controlled volume of head space.

Eventually the packaged noodle product preferably is in pack pasteurised at from 80 to 100°C, for from 1 to 80 min.

In a preferred embodiment of the present process, after having been dewatered, the noodle product is heat treated for about 30 to 90 s, especially by water boiling, steam blanching and/or passing under a hot water shower, before being water cooled and dipped into an acidified water.

Surprisingly this heating step notably helps in creating the required texture during processing as the present food product is not intended to be actually cooked again at the consumer's end but only heated up or very shortly cooked after unpacking.

Heating up or very shortly cooking the present food product after unpacking may be carried out in a pan, in a microwave oven, or by pouring hot or boiling water onto it, for example.

In a further embodiment of the present process, the steps consisting of dipping the noodle product into an acidified water, oiling it, packaging it and in pack pasteurising it are replaced by steps consisting of directly oiling the noodle product, packaging it and freezing it.

The corresponding further embodiment of the present product does not comprise an acid but is frozen instead. This embodiment of the present product may be thawed before unpacking or afterwards, especially during heating up or very shortly cooking, for example.

The present process may be implemented by means of normal equipment such as cooking-extruder, steeping unit, dewatering unit, optional steam blancher, water bath and/or showers from the edible dough industry, for example.

As cooking-extruder, a twin screw extruder may be used which has a casing divided into successive double walled sectors the respective temperatures of which may be adjusted by circulating fluids at appropriate temperatures, for example.

Such an extruder may be provided with an extrusion die consisting of a thick steel plate with holes of rectangular cross section about 8 to 14 mm in width and about 0.6 to 1.2 mm in height, for example.

The product and the process according to the present invention are further disclosed in more details in the following Examples in which the percentages and parts are by weight.

### Example 1

83.95 parts of round-grain rice flour (Oryza sativa japonica) having a moisture content of from 12 to 14%, 15.41 parts of potato starch, 1.21 parts of monoglycerides of vegetable origin, and 0.51 of sodium alginate were dry premixed.

A mixture was prepared by feeding 100 parts of the dry premix and 133 parts of softened water containing about 2.10⁻⁴ moles of divalent calcium per litre into a C 58 type Werner & Pfleiderer twin screw extruder in which it was cooked-extruded at about 100°C under about 4 MPa (about 40 bar) for about 30 s.

The temperature of the cooked mixture was adjusted at the end of the extruder in order that it was between 100 and 105°C on discharge of the die.

The die consisted of a thick steel plate with 10 holes of rectangular cross section 10 mm in width and 0.7 mm in height.

The extruded noodle product was immediatly immersed in and drawn continuously for 10 s through a bath of water having a temperature of 60°C and containing 0.16 moles of divalent calcium ions per liter, in the form of CaCl2 or CaCO3.

The noodle product was then dewatered, cut into length of about 400 to 420 mm and portioned into baskets about 90 to 120 g in weight.

The portioned noodle product was steam blanched for 60 s with saturated steam at atmospheric pressure.

The steam blanched noodle product was cooled by dipping for 15 to 45 s into a bath of water having a temperature of 20 to 30°C.

The cooled noodle product was dipped for about 100 s into a bath of acidified water containing 1.1% of lactic acid and having a pH of 2.6.

Excessive water was drained off.

The acidified noodle product was then oiled with palm olein containing a few percents of monoglycerides of vegetable origin, so that it was covered with a homogeneous oil film representing about 1 to 3% of its weight.

The oiled noodle product, which was already portioned, was packaged into plastic pouches and sealed, the pouches being 165 mm x 145 mm and having about 30 to 50 ml air as headspace.

The packaged noodle product was in pack pasteurised in hot air or water for about 35 to 50 min at about 85 to 90°C.

The in pack pasteurised noodle product was cooled in tap water (treated with sanitizer) for 15 min or in chilled air for 40 min.

The noodle product thus obtained had a pH of between about 3.9 to 4.1 and a water content of between about 65 to 70%. Its temperature was about room temperature.

The noodle product could be prepared for consumption by unpacking and heating up.

The product did not stick together and had a smooth surface and texture.

The texture was particularly tender and slightly resilient, as is the texture of the traditional rice noodles known by the name of Koay Teow.

### Example 2

The manufacturing process was as disclosed in Example 1 except that the dewatered noodle product was not steam blanched before acidification.

The noodle product thus obtained was fairly close to Koay Teow noodles even if not as close as the product obtained in Example 1 with regard to its texture.

### Example 3

The manufacturing process was as disclosed in Example 1 except that maize flour was used instead of rice flour.

The noodle product thus obtained was fairly close to traditional Koay Teow noodles even if not as close as the product obtained in Example 1 with regard to its taste and texture.

### Example 4

The manufacturing process was similar as the one disclosed in Example 1, a substantial difference lying in the composition of the dry premix which was as follows (in parts) :

| | |
|---|---|
| Rice flour | 70 |
| Potato starch | 24 |
| Monoglycerides | 0.6 |
| Guar gum flour | 0.3 |
| Sodium alginate | 0.5 |
| Wheat protein | 2.5 |
| Palmolein | 2.1 |

The mixture was then prepared by feeding 100 parts of this dry premix and 113 parts of softened water into the cooker-extruder.

A further difference lay in the fact that the noodle product was quickly passed under a hot water shower after steam blanching and before cooling and acidification.

The noodle product thus obtained was very close to traditional Koay Teow noodles and even closer as the product obtained in Example 1 with regard to its texture.

## Claims

1. A full moisture shelf stable noodle product having a dry matter content of from 30 to 45% by weight, having a pH of from 3.7 to 4.5 and comprising a cooked flour or semolina of a starchy plant, softened water, a cooked starch, an ionic gelling agent, an emulsifier, a cation which has formed a gel with the ionic gelling agent, an acid and an oil.

2. A full moisture frozen noodle product having a dry matter content of from 30 to 45% by weight and comprising a cooked flour or semolina of a starchy plant, softened water, a cooked starch, an ionic gelling agent, an emulsifier, a cation which has formed a gel with the ionic gelling agent and an oil.

3. A noodle product according to claim 1, which has a rectangular cross section from 8 to 14 mm in width and from 0.6 to 1.2 mm in height.

4. A noodle product according to claim 1, which comprises, in parts by weight on dry matter, from 75 to 100 parts of cooked flour or semolina of a starchy plant, from 5 to 30 parts of cooked starch, from 0.2 to 1.5 parts of ionic gelling agent, from 0.5 to 5 parts of emulsifier and from 0.5 to 5 parts of oil.

5. A noodle product according to claim 1, in which the starchy plant is cereal grains, especially rice or maize, or legumes, especially soya, or tubers rich in starch, especially potato or yam.

6. A noodle product according to claim 1, in which the starch is maize starch, potato starch or tapioca starch.

7. A noodle product according to claim 1, in which the ionic gelling agent is an acid polysaccharide, especially an alginate, the cation is an alkaline earth metal ion, especially the divalent calcium ion, the emulsifier is a monoglyceride or a mixture of monoglycerides, the acid is a food grade acid, especially lactic or phosphoric acid, and the oil is vegetable oil, especially peanut oil, rapeseed oil, sunflower oil or palm olein.

8. A noodle product according to claim 4, further comprising from 0.2 to 2 parts of hydrocolloid, especially guar gum, xanthan gum or carob bean flour, and from 0.5 to 5 parts of protein, especially wheat protein.

9. A process for manufacturing a full moisture shelf stable noodle product consisting of preparing a mixture having a dry matter content of from 30 to less than 45% by weight and comprising a flour or semolina of a starchy plant, softened water, a starch, an ionic gelling agent and an emulsifier, forming the noodle product by cooking-extrusion of the mixture, immediately bringing the noodle product into contact with water containing a cation which forms a gel with the ionic gelling agent, dewatering the noodle product, cutting it, water cooling it, dipping it into an acidified water, oiling it, packaging it and in pack pasteurising it.

10. A process for manufacturing a full moisture frozen noodle product consisting of preparing a mixture having a dry matter content of from 30 to less than 45% by weight and comprising a flour or semolina of a starchy plant, softened water, a starch, an ionic gelling agent and an emulsifier, forming the noodle product by cooking-extrusion of the mixture, immediately bringing the noodle product into contact with water containing a cation which forms a gel with the ionic gelling agent, dewatering the noodle product, cutting it, water cooling it, oiling it, packaging it and freezing it.

11. A process according to claim 9, in which cooking-extrusion is carried out under from 0.8 - 6.9 MPa (from 8 to 69 bar), at from 60 to 105°C and for 20 to 120 s.

12. A process according to claim 9, in which the noodle product is brought for 2 to 30 s into contact with a water containing the cation at a concentration of from 0.05 to 0.2 mol/l and having a temperature of from 60 to 70°C.

13. A process according to claim 9, in which the water cooled noodle product is dipped into an acidified water containing from 0.5 to 1.5% acid, especially lactic and/or phosphoric acid, at ambient temperature, especially at from 18 to 35⁰C, for from 60 to 150 s.

14. A process according to claim 9, in which the packaged noodle product is in pack pasteurised at from 80 to 100°C, for from 1 to 80 min.

15. A process according to claim 9, in which the dewatered noodle product is heat treated before being water cooled and dipped into an acidified water.

16. A process according to claim 15, in which heat treating is carried out for 30 to 90 s by water boiling, steam blanching and/or passing under a hot water shower.

## Patentansprüche

1. Bei Raumtemperatur lagerstabiles Nudelprodukt mit vollem Feuchtigkeitsgehalt, das einen Trockenmassegehalt von 30 bis 45 Gew.-%, einen pH von 3,7 bis 4,5 aufweist und ein gekochtes Mehl oder einen gekochten Grieß einer stärkehaltigen Pflanze, weichgemachtes Wasser, eine gekochte Stärke, ein ionisches Geliermittel, einen Emulgator, ein Kation, das ein Gel mit dem ionischen Geliermittel gebildet hat, eine Säure und ein Öl umfaßt.

2. Gefrorenes Nudelprodukt mit vollem Feuchtigkeitsgehalt, das einen Trockenmassegehalt von 30 bis 45 Gew.-% aufweist und ein gekochtes Mehl oder einen gekochten Grieß einer stärkehaltigen Pflanze, weichgemachtes Wasser, eine gekochte Stärke, ein ionisches Geliermittel, einen Emulgator, ein Kation, das ein Gel mit dem ionischen Geliermittel gebildet hat, und ein Öl umfaßt.

3. Nudelprodukt nach Anspruch 1, das einen rechteckigen Querschnitt mit einer Breite von 8 bis 14 mm und einer Höhe von 0,6 bis 1,2 mm aufweist.

4. Nudelprodukt nach Anspruch 1, das, in Gewichtsteilen bezogen auf die Trockenmasse, von 75 bis 100 Teile gekochtes Mehl oder gekochten Grieß einer stärkehaltigen Pflanze, von 5 bis 30 Teile gekochte Stärke, von 0,2 bis 1,5 Teile ionisches Geliermittel, von 0,5 bis 5 Teile Emulgator und von 0,5 bis 5 Teile Öl umfaßt.

5. Nudelprodukt nach Anspruch 1, bei dem die stärkehaltige Pflanze Getreidekörner, insbesondere Reis oder Mais, oder Hülsenfrüchte, insbesondere Soja, oder stärkereiche Knollen, insbesondere Kartoffel oder Süßkartoffel, sind.

6. Nudelprodukt nach Anspruch 1, bei dem die Stärke Maisstärke, Kartoffelstärke oder Tapiokastärke ist.

7. Nudelprodukt nach Anspruch 1, bei dem das ionische Geliermittel ein saures Polysaccharid, insbesondere ein Alginat, ist, das Kation ein Erdalkalimetallion, insbesondere das divalente Calciumion, ist, der Emulgator ein Monoglycerid oder eine Mischung von Monoglyceriden ist, die Säure eine Säure von Lebensmittelqualität, insbesondere Milch- oder Phosphorsäure, ist und das Öl ein Pflanzenöl ist, insbesondere Erdnußöl, Rapsöl, Sonnenblumenöl oder Palm-Olein.

8. Nudelprodukt nach Anspruch 4, das außerdem von 0,2 bis 2 Teile eines Hydrokolloids, insbesondere Guargummi, Xanthangummi oder Johannisbrotkernmehl, sowie von 0,5 bis 5 Teile Protein, insbesondere Weizenprotein, umfaßt.

9. Verfahren zur Herstellung eines bei Raumtemperatur lagerfähigen Nudelprodukts mit vollem Feuchtigkeitsgehalt, das besteht in der Herstellung einer Mischung, die einen Trockenmassegehalt von 30 bis weniger als 45 Gew.-% aufweist und ein Mehl oder einen Grieß einer stärkehaltigen Pflanze, weichgemachtes Wasser, eine Stärke, ein ionisches Geliermittel und einen Emulgator umfaßt, Bilden des Nudelprodukts durch Kochextrudieren der Mischung, sofortiges Inkontaktbringen des Nudelprodukts mit Wasser, das ein Kation enthält, das ein Gel mit dem ionischen Geliermittel bildet, Entwässern des Nudelprodukts, sein Schneiden, seine Wasserkühlung, sein Eintauchen in ein angesäuertes Wasser, sein Ölen, sein Verpacken und sein Pasteurisieren in der Verpackung umfaßt.

10. Verfahren zur Herstellung eines gefrorenen Nudelprodukts mit vollem Feuchtigkeitsgehalt, das besteht in der Herstellung einer Mischung, die einen Trockenmassegehalt von 30 bis weniger als 45 Gew.-% aufweist und ein Mehl oder einen Grieß einer stärkehaltigen Pflanze, weichgemachtes Wasser, eine Stärke, ein ionisches Geliermittel und einen Emulgator umfaßt, Bilden des Nudelprodukts durch Kochextrudieren der Mischung, sofortiges Inkontaktbringen des Nudelprodukts mit Wasser, das ein Kation enthält, das ein Gel mit dem ionischen Geliermittel bildet, Entwässern des Nudelprodukts, sein Schneiden, seine Wasserkühlung, sein Ölen, sein Verpacken und sein Einfrieren umfaßt.

11. Verfahren nach Anspruch 9, bei dem die Kochextrusion unter von 0,8 bis 6,9 MPa (von 8 bis 69 bar) bei von 60 bis 105°C und für 20 bis 120 s durchgeführt wird.

12. Verfahren nach Anspruch 9, bei dem das Nudelprodukt für 2 bis 30 s mit einem Wasser, das das Kation in einer Konzentration von 0,05 bis 0,2 mol/l enthält und eine Temperatur von 60 bis 70°C aufweist, in Kontakt gebracht wird.

13. Verfahren nach Anspruch 9, wobei das wassergekühlte Nudelprodukt in ein angesäuertes Wasser, das von 0,5 bis 1,5 % Säure, insbesondere Milch- und/oder Phosphorsäure, enthält, bei Umgebungstemperatur, insbesondere bei von 18 bis 35°C, für von 60 bis 150 s eingetaucht wird.

14. Verfahren nach Anspruch 9, bei dem das verpackte Nudelprodukt bei von 80 bis 100°C für von 1 bis 80 min in der Verpackung pasteurisiert wird.

15. Verfahren nach Anspruch 9, bei dem das entwässerte Nudelprodukt wärmebehandelt wird, bevor es wassergekühlt wird und in ein angesäuertes Wasser eingetaucht wird.

16. Verfahren nach Anspruch 15, bei dem die Wärmebehandlung für 30 bis 90 s durch Kochen in Wasser, Blanchieren mit Dampf und/oder unter einer Heißwasserdusche Hindurchführen durchgeführt wird.

## Revendications

1. Produit consistant en nouilles à pleine teneur en eau, stable à la conservation, ayant une teneur en matière sèche de 30 à 45 % en poids, ayant un pH de 3,7 à 4,5 et comprenant une farine ou semoule cuite d'une plante amylacée, de l'eau adoucie, un amidon cuit, un agent gélifiant ionique, un émulsionnant, un cation qui a formé un gel avec l'agent gélifiant ionique, un acide et une huile.

2. Produit consistant en nouilles à pleine teneur en eau, congelé, ayant une teneur en matière sèche de 30 à 45 % en poids et comprenant une farine ou semoule cuite d'une plante amylacée, de l'eau adoucie, un amidon cuit, un agent gélifiant ionique, un émulsionnant, un cation qui a formé un gel avec l'agent gélifiant ionique et une huile.

3. Produit consistant en nouilles suivant la revendication 1, qui a une section transversale rectangulaire de 8 à 14 mm de largeur et de 0,6 à 1,2 mm de hauteur.

4. Produit consistant en nouilles suivant la revendication 1, qui comprend, en parties en poids sur la base de la matière sèche, 75 à 100 parties de farine ou semoule cuite d'une plante amylacée, 5 à 30 parties d'amidon cuit, 0,2 à 1,5 partie d'agent gélifiant ionique, 0,5 à 5 parties d'émulsionnant et 0,5 à 5 parties d'huile.

5. Produit consistant en nouilles suivant la revendication 1, dans lequel la plante amylacée consiste en grains d'une céréale, notamment de riz ou de maïs, ou en légumes, notamment soja, ou en tubercules riches en amidon, notamment de pommes de terre ou de manioc.

6. Produit consistant en nouilles suivant la revendication 1, dans lequel l'amidon est l'amidon de maïs, la fécule de pomme de terre ou la fécule de manioc.

7. Produit consistant en nouilles suivant la revendication 1, dans lequel l'agent gélifiant ionique est un polysaccharide acide, notamment un alginate, le cation est un ion de métal alcalino-terreux, notamment l'ion calcium divalent, l'émulsionnant est un monoglycéride ou un mélange de monoglycérides, l'acide est un acide de qualité alimentaire, notamment l'acide lactique ou l'acide phosphorique, et l'huile est une huile végétale, notamment l'huile d'arachides, l'huile de colza, l'huile de tournesol ou l'oléine de palme.

8. Produit consistant en nouilles suivant la revendication 4, comprenant en outre 0,2 à 2 parties d'un hydrocolloïde, notamment la gomme guar, la gomme xanthane ou la farine de graines de caroube, et 0,5 à 5 parties d'une protéine, notamment de protéine de blé.

9. Procédé pour la préparation d'un produit consistant en nouilles à pleine teneur en eau, stable à la conservation, consistant à préparer un mélange ayant une teneur en matière sèche de 30 à moins de 45 % en poids et comprenant une farine ou semoule d'une plante amylacée, de l'eau adoucie, un amidon, un agent gélifiant ionique et un émulsionnant, à former le produit consistant en nouilles par cuisson-extrusion du mélange, à mettre immédiatement le produit consistant en nouilles en contact avec de l'eau contenant un cation qui forme un gel avec l'agent gélifiant ionique, à éliminer l'eau du produit consistant en nouilles, à le couper, à le refroidir par eau, à le plonger dans une eau acidifiée, à l'huiler, à l'emballer et à le pasteuriser dans l'emballage.

10. Procédé pour la préparation d'un produit consistant en nouilles à pleine teneur en eau, congelé, consistant à préparer un mélange ayant une teneur en matière sèche de 30 à moins de 45 % en poids et comprenant une farine ou semoule d'une plante amylacée, de l'eau adoucie, un amidon, un agent gélifiant ionique et un émulsionnant, à former le produit consistant en nouilles par cuisson-extrusion du mélange, à mettre immédiatement le produit consistant en nouilles en contact avec de l'eau contenant un cation qui forme un gel avec l'agent gélifiant ionique, à éliminer l'eau du produit consistant en nouilles, à le couper, à le refroidir par eau, à l'huiler, à l'emballer et à le congeler.

11. Procédé suivant la revendication 9, dans lequel la cuisson-extrusion est effectuée sous une pression de 0,8 à 6,9 MPa (8 à 69 bars) à une température comprise dans l'intervalle de 60 à 105°C et pendant un temps de 20 à 120 s.

12. Procédé suivant la revendication 9, dans lequel le produit consistant en nouilles est mis pendant 2 à 30 s en contact avec une eau contenant le cation à une concentration de 0,05 à 0,2 mole/l et ayant une température de 60 à 70°C.

13. Procédé suivant la revendication 9, dans lequel le produit consistant en nouilles refroidies par eau est plongé dans une eau acidifiée contenant 0,5 à 1,5 % d'un acide, notamment d'acide lactique et/ou d'acide phosphorique, à température ambiante, notamment à une température comprise dans l'intervalle de 18 à 35°C, pendant un temps de 60 à 150 s.

14. Procédé suivant la revendication 9, dans lequel le produit consistant en nouilles emballé est pasteurisé dans l'emballage à une température comprise dans l'intervalle de 80 à 100°C pendant un temps de 1 à 80 min.

15. Procédé suivant la revendication 9, dans lequel le produit consistant en nouilles débarrassé de l'eau est soumis à un traitement thermique avant d'être refroidi par eau et plongé dans une eau acidifiée.

16. Procédé suivant la revendication 15, dans lequel le traitement thermique est effectué pendant 30 à 90 s par passage dans l'eau bouillante, blanchiment à la vapeur et/ou passage sous un système d'arrosage à l'eau chaude.
